# EUROPÄISCHE PATENTSCHRIFT

(11) **EP 3 947 216 B1**
(45) Veröffentlichungstag und Bekanntmachung des Hinweises auf die Patenterteilung: **03.09.2025**
(21) Anmeldenummer: 20714157.3
(22) Anmeldetag: 18.03.2020
(51) Int. Cl.: B65G 47/08, B65G 47/31

(54) **VERFAHREN ZUM BETRIEB EINER ZUFÜHRVORRICHTUNG UND ZUFÜHRVORRICHTUNG**
METHOD FOR OPERATING A SUPPLY DEVICE, AND SUPPLY DEVICE
PROCÉDÉ POUR FAIRE FONCTIONNER UN DISPOSITIF D'ALIMENTATION ET DISPOSITIF D'ALIMENTATION

(30) Priorität: 28.03.2019 DE 102019204389
(43) Veröffentlichungstag der Anmeldung: 09.02.2022
(73) Patentinhaber: Körber Supply Chain Automation Eisenberg GmbH, 67304 Eisenberg (DE)
(72) Erfinder: STOLLHOF, Karlheinz, 67814 Dannenfels (DE); BLASIUS, Christopher, 67725 Börrstadt (DE)
(74) Vertreter: Hörschler, Wolfram Johannes
(86) Internationale Anmeldenummer: PCT/EP2020/057484
(87) Internationale Veröffentlichungsnummer: WO 2020/193319

(56) Entgegenhaltungen:
- EP-A1- 3 081 513
- WO-A1-2019/011565
- DE-A1- 102013 203 242
- DE-A1- 102015 210 185
- DE-A1- 102017 215 320

## Beschreibung

Die Erfindung betrifft ein Verfahren zum Betrieb einer Zuführvorrichtung, welche mindestens einen Einlaufförderer, mindestens einen Zwischenförderer, einen Auslaufförderer und mindestens eine Handhabungseinrichtung umfasst, wobei einzelne Produkte von dem mindestens einen Einlaufförderer zu einem Arbeitsbereich der mindestens einen Handhabungseinrichtung gefördert werden, die Produkte von der mindestens einen Handhabungseinrichtung von dem mindestens einen Einlaufförderer auf den mindestens einen kontinuierlich laufenden Zwischenförderer zur Bildung einer Artikellage versetzt werden, und die Artikellage von dem mindestens einen Zwischenförderer an den Auslaufförderer übergeben wird.

### Stand der Technik

Eine Zuführvorrichtung dient dazu, einzelne Produkte zu einer Artikellage entsprechend eines definierten Setzbildes zusammen zu setzen, und anschließend die fertige Artikellage an eine nachgelagerte Vorrichtung, beispielsweise eine Palettiervorrichtung, zu übergeben. Eine dazu geeignete Zuführvorrichtung umfasst beispielsweise einen Einlaufförderer, von welchem die einzelnen Produkte zu einem Arbeitsbereich einer Handhabungseinrichtung gefördert werden, einen Zwischenförderer, auf welchen die einzelne Produkte zur Bildung einer Artikellage von der Handhabungseinrichtung versetzt werden, und einen Auslaufförderer, auf welchen die Artikellage von dem Zwischenförderer übergeben wird, und welcher die fertige Artikellage an die nachgelagerte Vorrichtung übergibt.

Die einzelnen Produkte können dabei einreihig oder mehrreihig hintereinander über einen oder mehrere Einlaufförderer an der Zuführvorrichtung ankommen und dort zu stapelfähigen Artikellagen verschoben und/oder zusammengestellt werden. Die stapelfähigen Artikellagen werden dann nacheinander an die nachgelagerte Vorrichtung, beispielsweise eine Palettiervorrichtung, übergeben, welche die stapelfähigen Artikellagen auf einem gewünschten Stapelplatz, insbesondere auf einer Palette, absetzt.

Das Dokument DE 10 2015 210 185 A1 offenbart eine Vorrichtung sowie ein Verfahren zum Herstellen eines definierten Lagenbildes aus mehreren Stückgütern. Dabei werden die Stückgüter auf wenigstens zwei Horizontalfördereinrichtungen mit parallel zueinander orientierten Förderrichtungen transportiert und in Richtung eines Arbeitssystems geführt. Die Stückgüter werden von dem Arbeitssystem selektiv entgegengenommen, gedreht und/oder schräg versetzt. Dadurch wird eine vordefinierte Formation auf einem Formierungsband erzeugt. Die vordefinierte Formation an Stückgütern wird anschließend von dem Formierungsband an ein Lagenbildungsband übergeben, wo aus der vordefinierten Formation eine palettierfähige Lage gebildet wird. Die DE 10 2015 210 185 A1 offenbart ein Verfahren mit den Merkmalen des Oberbegriffs des Anspruchs 1.

Das Dokument DE 10 2016 206 639 A1 offenbart eine Vorrichtung sowie ein Verfahren zum Umgang mit hintereinander bewegten Stückgütern. Dabei werden unmittelbar aufeinanderfolgende Stückgüter als geschlossene Formation in einer Reihe transportiert, einzelne Stückgüter erfasst und in eine definierte relative Zielposition gebracht. Die dazu verwendete Vorrichtung umfasst einen Manipulator für Stückgüter und eine Transporteinrichtung, über welche die Stückgüter in einen Erfassungsbereich des Manipulators transportiert werden.

Das Dokument DE 10 2016 206 659 A1 offenbart ebenfalls ein Verfahren sowie eine Vorrichtung zum Umgang mit hintereinander bewegten Stückgütern. Dabei werden unmittelbar aufeinanderfolgende Stückgüter in mehreren Reihen als geschlossene Formation transportiert, einzelne Stückgüter erfasst und in eine definierte relative Zielposition gebracht. Die dazu verwendete Vorrichtung umfasst einen Manipulator für Stückgüter und wenigstens zwei Transporteinrichtungen, über welche die Stückgüter in einen Erfassungsbereich des Manipulators transportiert werden.

Auch das Dokument DE 10 2016 206 660 A1 offenbart eine Vorrichtung sowie ein Verfahren zum Umgang mit hintereinander bewegten Stückgütern. Dabei werden unmittelbar aufeinanderfolgende Stückgüter als geschlossene Formation in einer Reihe transportiert, einzelne Stückgüter mittels mehrerer Manipulatoren erfasst und in eine definierte relative Zielposition gebracht. Die dazu verwendete Vorrichtung umfasst mehrere Manipulatoren für Stückgüter und eine Transporteinrichtung, über welche die Stückgüter in einen Erfassungsbereich des Manipulators transportiert werden.

### Aufgabe

Aufgabe der vorliegenden Erfindung ist es, eine Zuführvorrichtung der eingangs genannten Art zu verbessern. Insbesondere ist es Aufgabe der Erfindung, die Geschwindigkeit beim Bilden und bei Übergeben der Artikellagen zu erhöhen und eine präzise Übergabe der Artikellagen an eine nachgelagerte Vorrichtung, beispielsweise eine Palettiervorrichtung, zu gewährleisten.

### Lösung

Diese Aufgabe wird durch ein Verfahren zum Betrieb einer Zuführvorrichtung mit den Merkmalen des Anspruchs 1 gelöst. Vorteilhafte Ausgestaltungen und Weiterbildungen der Erfindung sind Gegenstand der Unteransprüche.

Eine gattungsgemäße Zuführvorrichtung, mittels welcher einzelne Produkte zu einer Artikellage zusammengesetzt und an eine nachgelagerte Vorrichtung übergeben werden können, umfasst mindestens einen Einlaufförderer, mindestens einen Zwischenförderer, einen Auslaufförderer und mindestens eine Handhabungseinrichtung.

Gemäß einem gattungsgemäßen Verfahren zum Betrieb der Zuführvorrichtung werden einzelne Produkte von dem mindestens einen Einlaufförderer kontinuierlich zu einem Arbeitsbereich der mindestens einen Handhabungseinrichtung gefördert. Die Produkte werden von der mindestens einen Handhabungseinrichtung von dem mindestens einen Einlaufförderer auf den mindestens einen kontinuierlich laufenden Zwischenförderer zur Bildung einer Artikellage entsprechend eines Setzbildes versetzt. Die Artikellage wird dann von dem mindestens einen Zwischenförderer an den Auslaufförderer übergeben.

Der Einlaufförderer und der Zwischenförderer laufen kontinuierlich und fördern die Produkte dabei in eine Transportrichtung. Das bedeutet in diesem Zusammenhang, dass die besagten Förderer während des Betriebs der Zuführvorrichtung stetig laufen und dabei nicht zum Stillstand kommen. Die Förderer müssen dabei jedoch nicht zwingend mit konstanter Geschwindigkeit laufen. Lediglich, wenn keine weiteren Produkte angeliefert werden, können der Einlaufförderer sowie der Zwischenförderer stehen bleiben. Der Auslaufförderer kann je nach Erfordernissen der nachgelagerten Komponenten ebenfalls kontinuierlich oder getaktet betrieben werden.

Die Transportrichtung verläuft horizontal und parallel zu einem Fußboden, auf welchem die Zuführvorrichtung positioniert ist. Eine Vertikalrichtung erstreckt sich rechtwinklig zu dem Fußboden und somit auch rechtwinklig zu der Transportrichtung. Eine Querrichtung erstreckt sich rechtwinklig zu der Vertikalrichtung und rechtwinklig zu der Transportrichtung. Somit erstreckt sich die Querrichtung auch horizontal und parallel zu dem Fußboden.

Erfindungsgemäß ist vorgesehen, dass während der Bildung der Artikellage der mindestens eine Zwischenförderer mit einer Übergabegeschwindigkeit läuft, dass während der Übergabe der Artikellage von dem mindestens einen Zwischenförderer an den Auslaufförderer der mindestens eine Zwischenförderer und der Auslaufförderer mit einer gleichen Geschwindigkeit laufen, und dass der Auslaufförderer nach der Bildung der Artikellage auf eine Auslaufgeschwindigkeit beschleunigt wird, welche größer als die Übergabegeschwindigkeit ist.

Die Artikellage wird also auf dem Zwischenförderer entsprechend des Setzbildes gebildet und während der Bildung bereits an den Auslaufförderer übergeben. Da während der Übergabe der Artikellage der Zwischenförderer und der Auslaufförderer mit der gleichen Geschwindigkeit laufen, kann die Artikellage sich teilweise auf dem Zwischenförderer und teilweise auf dem Auslaufförderer befinden, wobei das Setzbild der Artikellage erhalten bleibt.

Erfindungsgemäß werden der Auslaufförderer und der mindestens eine Zwischenförderer während der Übergabe der Artikellage von dem mindestens einen Zwischenförderer an den Auslaufförderer, aber erst nach der Bildung der Artikellage, auf die Auslaufgeschwindigkeit beschleunigt. Wenn die Artikellage vollständig gebildet ist, werden der Auslaufförderer und der Zwischenförderer also gleichzeitig auf die Auslaufgeschwindigkeit beschleunigt. Das Setzbild der Artikellage bleibt dabei erhalten. Die Artikellage kann somit mit einer im Vergleich zu der Übergabegeschwindigkeit höheren Auslaufgeschwindigkeit an den Auslaufförderer und an die nachgelagerte Vorrichtung übergeben werden. Der mindestens eine Zwischenförderer wird nach der Übergabe der Artikellage von dem mindestens einen Zwischenförderer an den Auslaufförderer vorzugsweise wieder auf die Übergabegeschwindigkeit abgebremst.

Vorteilhaft wird die Artikellage von dem mit der Auslaufgeschwindigkeit laufenden Auslaufförderer an eine nachgelagerte Vorrichtung, insbesondere an eine Palettiervorrichtung, welche die Artikellage beispielsweise auf einer Palette oder auf einem Palettenstapel absetzt, übergeben. Der Auslaufförderer wird dann nach der Übergabe der Artikellage an die nachgelagerte Vorrichtung wieder auf die Übergabegeschwindigkeit abgebremst. Insbesondere wird der Auslaufförderer wieder auf die Übergabegeschwindigkeit abgebremst, bevor eine weitere Artikellage, mit deren Bildung auf dem Zwischenförderer bereits begonnen wurde, von dem Zwischenförderer an den Auslaufförderer übergeben wird.

Erfindungsgemäß umfasst die Zuführvorrichtung einen ersten Einlaufförderer, welcher mit einer ersten Einlaufgeschwindigkeit läuft, und einen zweiten Einlaufförderer, welcher mit einer zweiten Einlaufgeschwindigkeit läuft. Der erste Einlaufförderer und der zweite Einlaufförderer sind dabei vorzugsweise in Querrichtung parallel versetzt zueinander angeordnet.

Gemäß einer möglichen Ausgestaltung der Erfindung ist die erste Einlaufgeschwindigkeit gleich der zweiten Einlaufgeschwindigkeit. Gemäß einer anderen möglichen Ausgestaltung der Erfindung ist die erste Einlaufgeschwindigkeit von der zweiten Einlaufgeschwindigkeit verschieden. Die erste Einlaufgeschwindigkeit und die zweite Einlaufgeschwindigkeit können insbesondere an eine Frequenz der von dem jeweiligen Einlaufförderer geförderten Produkte angepasst werden.

Gemäß einer vorteilhaften Weiterbildung der Erfindung umfasst die Zuführvorrichtung einen dritten Einlaufförderer, welcher mit einer dritten Einlaufgeschwindigkeit läuft. Der dritte Einlaufförderer ist dabei vorzugsweise in Querrichtung zwischen dem ersten Einlaufförderer und dem zweiten Einlaufförderer angeordnet.

Dabei ist die dritte Einlaufgeschwindigkeit von der ersten Einlaufgeschwindigkeit und/oder von der zweiten Einlaufgeschwindigkeit verschieden. Die erste Einlaufgeschwindigkeit, die zweite Einlaufgeschwindigkeit und die dritte Einlaufgeschwindigkeit können insbesondere an eine Frequenz der von dem jeweiligen Einlaufförderer geförderten Produkte angepasst werden.

Gemäß einer möglichen Ausgestaltung der Erfindung ist der mindestens eine Zwischenförderer in der Querrichtung zwischen dem ersten Einlaufförderer und dem zweiten Einlaufförderer angeordnet. Dadurch sind die Arbeitswege der Handhabungseinrichtung beim Versetzen der Produkte zur Bildung der Artikellage verhältnismäßig kurz.

Gemäß einer vorteilhaften Weiterbildung der Erfindung umfasst die Zuführvorrichtung einen ersten Zwischenförderer und einen zweiten Zwischenförderer. Der erste Zwischenförderer und der zweite Zwischenförderer laufen dabei beide mit der Übergabegeschwindigkeit, also gleich schnell. Dadurch kann die Artikellage sich teilweise auf dem ersten Zwischenförderer und teilweise auf dem zweiten Zwischenförderer befinden, wobei das Setzbild der Artikellage erhalten bleibt.

Dabei ist der erste Zwischenförderer in der Transportrichtung zwischen dem zweiten Zwischenförderer und dem Auslaufförderer angeordnet. Der zweite Zwischenförderer, der erste Zwischenförderer und der Auslaufförderer sind also in der Transportrichtung hintereinander angeordnet. Bei der Bildung der Artikellage werden die einzelnen Produkte dabei teilweise auf den ersten Zwischenförderer und teilweise auf den zweiten Zwischenförderer gesetzt.

Gemäß einer möglichen Ausgestaltung der Erfindung ist der mindestens eine Zwischenförderer in der Transportrichtung zwischen dem mindestens einen Einlaufförderer und dem Auslaufförderer angeordnet. Dadurch kann die Ausdehnung der Zuführvorrichtung in der Querrichtung vorteilhaft auf die Ausdehnung des Auslaufförderers in der Querrichtung reduziert werden.

Gemäß einer bevorzugten Ausgestaltung der Erfindung wird eine Anzahl von Produkten zur Bildung der Artikellage entsprechend des Setzbildes um eine in Vertikalrichtung verlaufende Achse gedreht. Dadurch können die Produkte unabhängig von ihrer Orientierung auf dem mindestens einen Einlaufförderer entsprechend des Setzbildes umgesetzt werden. Auch komplizierte Setzbilder können somit verwirklicht werden.

Vorzugsweise weist die mindestens eine Handhabungseinrichtung einen zumindest annähernd kreisförmigen Arbeitsbereich auf, welcher sich in der Transportrichtung und in der Querrichtung über mindestens einen Teil des mindestens einen Einlaufförderers und über mindestens einen Teil des mindestens einen Zwischenförderers erstreckt. Somit kann die Handhabungseinrichtung bei der Bildung der Artikellage die einzelnen Produkte von dem Einlaufförderer aufnehmen und auf dem Zwischenförderer entsprechend des Setzbildes absetzen.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Die Figuren stellen den Gegenstand der Erfindung nur schematisch dar. Es zeigen:
- Figur 1: eine schematische Draufsicht auf eine Zuführvorrichtung gemäß einem ersten Ausführungsbeispiel,
- Figur 2: eine schematische perspektivische Ansicht der Zuführvorrichtung gemäß dem ersten Ausführungsbeispiel aus Figur 1
- Figur 3: eine schematische Draufsicht auf eine Zuführvorrichtung gemäß einem zweiten Ausführungsbeispiel und
- Figur 4: eine schematische Darstellung eines Setzbildes.

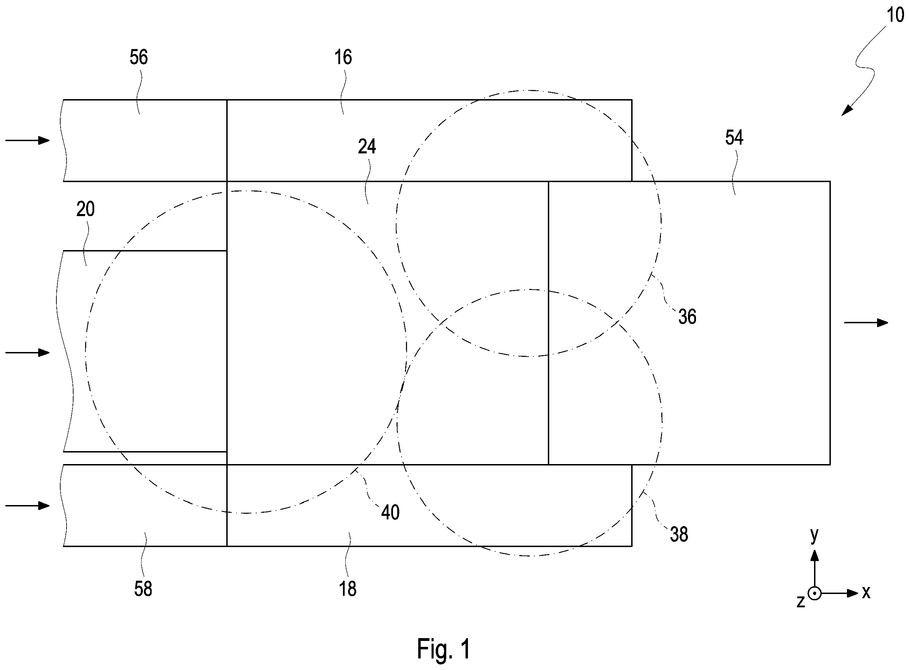

Figur 1 zeigt eine schematische Draufsicht auf eine Zuführvorrichtung 10 gemäß einem ersten Ausführungsbeispiel. Mittels der Zuführvorrichtung 10 werden einzelne, hier nicht dargestellte Produkte 12 zu einer hier ebenfalls nicht dargestellten Artikellage 14 zusammengesetzt. Die Artikellage 14 wird dann an eine nachgelagerte Vorrichtung, beispielsweise eine hier auch nicht dargestellte Palettiervorrichtung, übergeben.

Die Zuführvorrichtung 10 umfasst einen ersten Einlaufförderer 16, einen zweiten Einlaufförderer 18 und einen dritten Einlaufförderer 20. Die Einlaufförderer 16, 18, 20 sind in Form von Förderbändern ausgestaltet und fördern die Produkte 12 in eine Transportrichtung x. Die Transportrichtung x verläuft horizontal und parallel zu einem Fußboden, auf welchem die Zuführvorrichtung 10 positioniert ist. Eine Vertikalrichtung z erstreckt sich rechtwinklig zu dem Fußboden und somit auch rechtwinklig zu der Transportrichtung x. Eine Querrichtung y erstreckt sich rechtwinklig zu der Vertikalrichtung z und rechtwinklig zu der Transportrichtung x. Somit erstreckt sich die Querrichtung y auch horizontal und parallel zu dem Fußboden.

Der erste Einlaufförderer 16 läuft mit einer ersten Einlaufgeschwindigkeit. Der zweite Einlaufförderer 18 läuft mit einer zweiten Einlaufgeschwindigkeit. Der dritte Einlaufförderer 20 läuft mit einer dritten Einlaufgeschwindigkeit. Die erste Einlaufgeschwindigkeit kann von der zweiten Einlaufgeschwindigkeit verschieden sein. Die dritte Einlaufgeschwindigkeit kann von der ersten Einlaufgeschwindigkeit sowie von der zweiten Einlaufgeschwindigkeit verschieden sein. Die Produkte 12 können also von den Einlaufförderer 16, 18, 20 mit verschiedenen Einlaufgeschwindigkeiten gefördert werden.

Der erste Einlaufförderer 16 und der zweite Einlaufförderer 18 sind in Querrichtung y parallel versetzt zueinander angeordnet. Der dritte Einlaufförderer 20 ist in Querrichtung y zwischen dem ersten Einlaufförderer 16 und dem zweiten Einlaufförderer 18 angeordnet. Vorliegend ist der dritte Einlaufförderer 20 in Transportrichtung x versetzt zu dem ersten Einlaufförderer 16 und dem zweiten Einlaufförderer 18 angeordnet.

Dem ersten Einlaufförderer 16 ist in Transportrichtung x ein erster Vorförderer 56 vorgelagert welcher in Form eines Förderbandes ausgestaltet ist. Die Produkte 12 werden von dem ersten Vorförderer 56 an den ersten Einlaufförderer 16 übergeben. Dem zweiten Einlaufförderer 18 ist in Transportrichtung x ein zweiter Vorförderer 58 vorgelagert welcher ebenfalls in Form eines Förderbandes ausgestaltet ist. Die Produkte 12 werden von dem zweiten Vorförderer 58 an den zweiten Einlaufförderer 18 übergeben.

Die Zuführvorrichtung 10 umfasst ferner einen ersten Zwischenförderer 24, welcher ebenfalls in Form eines Förderbandes ausgestaltet ist. Der erste Zwischenförderer 24 ist in der Querrichtung y zwischen dem ersten Einlaufförderer 16 und dem zweiten Einlaufförderer 18 angeordnet. Der erste Zwischenförderer 24 ist in Transportrichtung x versetzt zu dem dritten Einlaufförderer 20 angeordnet.

Die Zuführvorrichtung 10 umfasst auch einen Auslaufförderer 54, welcher auch in Form eines Förderbandes ausgestaltet ist. Der Auslaufförderer 54 dient dazu, die fertiggestellte Artikellage 14 an die nachgelagerte Vorrichtung, insbesondere eine Palettiervorrichtung, zu übergeben. Der erste Zwischenförderer 24 ist in der Transportrichtung x zwischen dem dritten Einlaufförderer 20 und dem Auslaufförderer 54 angeordnet.

Ferner umfasst die Zuführvorrichtung 10 eine erste Handhabungseinrichtung 30, welche hier nicht dargestellt ist. Die erste Handhabungseinrichtung 30 weist einen kreisförmigen ersten Arbeitsbereich 36 auf, welcher sich in der Transportrichtung x und in der Querrichtung y über einen Teil des ersten Einlaufförderers 16 und über einen Teil des ersten Zwischenförderers 24 erstreckt.

Ferner umfasst die Zuführvorrichtung 10 eine zweite Handhabungseinrichtung 32, welche hier nicht dargestellt ist. Die zweite Handhabungseinrichtung 32 weist einen kreisförmigen zweiten Arbeitsbereich 38 auf, welcher sich in der Transportrichtung x und in der Querrichtung y über einen Teil des zweiten Einlaufförderers 18 und über einen Teil des ersten Zwischenförderers 24 erstreckt.

Ferner umfasst die Zuführvorrichtung 10 eine dritte Handhabungseinrichtung 34, welche hier nicht dargestellt ist. Die dritte Handhabungseinrichtung 34 weist einen kreisförmigen dritten Arbeitsbereich 40 auf, welcher sich in der Transportrichtung x und in der Querrichtung y über einen Teil des dritten Einlaufförderers 20, über einen Teil des zweiten Einlaufförderers 18 und über einen Teil des ersten Zwischenförderers 24 erstreckt.

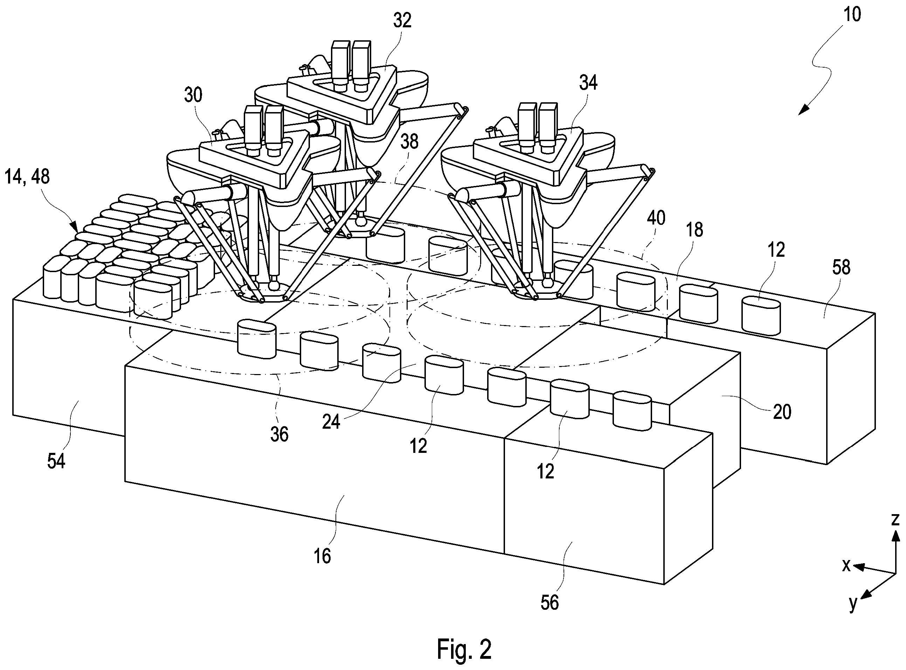

Figur 2 zeigt eine schematische perspektivische Ansicht der Zuführvorrichtung 10 gemäß dem ersten Ausführungsbeispiel aus Figur 1. Die erste Handhabungseinrichtung 30, die zweite Handhabungseinrichtung 32 und die dritte Handhabungseinrichtung 34 sind dabei als Roboter, beispielsweise in Form von Deltarobotern oder Hexapoden ausgestaltet.

Im Betrieb der Zuführvorrichtung 10 werden die einzelnen Produkte 12 von den Einlaufförderern 16, 18, 20 kontinuierlich zu den Arbeitsbereichen 36, 38, 40 der Handhabungseinrichtungen 30, 32, 34 gefördert. Die Produkte 12 werden dann von den Handhabungseinrichtungen 30, 32, 34 von den Einlaufförderern 16, 18, 20 auf den kontinuierlich laufenden ersten Zwischenförderer 24 zur Bildung einer Artikellage 14 entsprechend eines Setzbildes 48 versetzt. Dabei wird eine Anzahl von Produkten 12 zur Bildung der Artikellage 14 entsprechend des Setzbildes 48 um eine in Vertikalrichtung z verlaufende Achse gedreht.

Die Artikellage 14 wird dann von dem ersten Zwischenförderer 24 an den Auslaufförderer 54 übergeben. Während der Übergabe der Artikellage 14 von dem ersten Zwischenförderer 24 an den Auslaufförderer 54 laufen der erste Zwischenförderer 24 und der Auslaufförderer 54 mit einer gleichen Übergabegeschwindigkeit. Nicht erfindungsgemäß wird nach der Übergabe der Artikellage 14 von dem ersten Zwischenförderer 24 an den Auslaufförderer 54 wird der Auslaufförderer 54 auf eine Auslaufgeschwindigkeit beschleunigt, welche größer als die Übergabegeschwindigkeit ist.

In der hier gezeigten Darstellung wurde eine Artikellage 14 gerade an den Auslaufförderer 54 übergeben und befindet sich noch dort. Die Artikellage 14 wird von dem mit der Auslaufgeschwindigkeit laufenden Auslaufförderer 54 an eine nachgelagerte Vorrichtung, insbesondere an eine Palettiervorrichtung, übergeben. Der Auslaufförderer 54 wird dann nach der Übergabe der Artikellage 14 an die nachgelagerte Vorrichtung wieder auf die Übergabegeschwindigkeit abgebremst, bevor eine weitere Artikellage 14 von dem ersten Zwischenförderer 24 an den Auslaufförderer 54 übergeben wird.

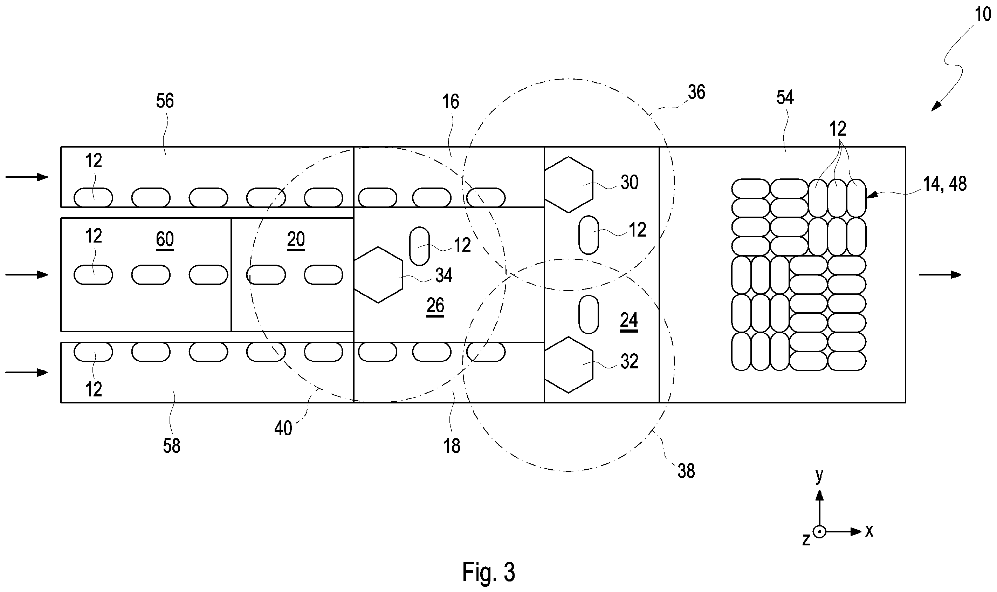

Figur 3 zeigt eine schematische Draufsicht auf eine Zuführvorrichtung 10 gemäß einem zweiten Ausführungsbeispiel. Mittels der Zuführvorrichtung 10 werden einzelne Produkte 12 zu einer Artikellage 14 zusammengesetzt. Die Artikellage 14 wird dann an eine nachgelagerte Vorrichtung, beispielsweise eine hier nicht dargestellte Palettiervorrichtung, übergeben.

Die Zuführvorrichtung 10 umfasst einen ersten Einlaufförderer 16, einen zweiten Einlaufförderer 18 und einen dritten Einlaufförderer 20. Die Einlaufförderer 16, 18, 20 sind in Form von Förderbändern ausgestaltet und fördern die Produkte 12 in eine Transportrichtung x.

Der erste Einlaufförderer 16 läuft mit einer ersten Einlaufgeschwindigkeit. Der zweite Einlaufförderer 18 läuft mit einer zweiten Einlaufgeschwindigkeit. Der dritte Einlaufförderer 20 läuft mit einer dritten Einlaufgeschwindigkeit. Die erste Einlaufgeschwindigkeit kann von der zweiten Einlaufgeschwindigkeit verschieden sein. Die dritte Einlaufgeschwindigkeit kann von der ersten Einlaufgeschwindigkeit sowie von der zweiten Einlaufgeschwindigkeit verschieden sein. Die Produkte 12 können also von den Einlaufförderer 16, 18, 20 mit verschiedenen Einlaufgeschwindigkeiten gefördert werden.

Der erste Einlaufförderer 16 und der zweite Einlaufförderer 18 sind in Querrichtung y parallel versetzt zueinander angeordnet. Der dritte Einlaufförderer 20 ist in Querrichtung y zwischen dem ersten Einlaufförderer 16 und dem zweiten Einlaufförderer 18 angeordnet. Vorliegend ist der dritte Einlaufförderer 20 in Transportrichtung x versetzt zu dem ersten Einlaufförderer 16 und dem zweiten Einlaufförderer 18 angeordnet.

Dem ersten Einlaufförderer 16 ist in Transportrichtung x ein erster Vorförderer 56 vorgelagert welcher in Form eines Förderbandes ausgestaltet ist. Die Produkte 12 werden von dem ersten Vorförderer 56 an den ersten Einlaufförderer 16 übergeben. Dem zweiten Einlaufförderer 18 ist in Transportrichtung x ein zweiter Vorförderer 58 vorgelagert welcher ebenfalls in Form eines Förderbandes ausgestaltet ist. Die Produkte 12 werden von dem zweiten Vorförderer 58 an den zweiten Einlaufförderer 18 übergeben. Dem dritten Einlaufförderer 20 ist in Transportrichtung x ein dritter Vorförderer 60 vorgelagert welcher ebenfalls in Form eines Förderbandes ausgestaltet ist. Die Produkte 12 werden von dem dritten Vorförderer 60 an den dritten Einlaufförderer 20 übergeben.

Die Zuführvorrichtung 10 umfasst einen ersten Zwischenförderer 24, welcher in Form eines Förderbandes ausgestaltet ist, und einen zweiten Zwischenförderer 26, welcher ebenfalls in Form eines Förderbandes ausgestaltet ist. Die beiden Zwischenförderer 24, 26 laufen mit der Übergabegeschwindigkeit, also gleich schnell.

Der zweite Zwischenförderer 26 ist in Transportrichtung x zwischen dem dritten Einlaufförderer 20 und dem ersten Zwischenförderer 24 angeordnet. Der zweite Zwischenförderer 26 ist in der Querrichtung y zwischen dem ersten Einlaufförderer 16 und dem zweiten Einlaufförderer 18 angeordnet.

Die Zuführvorrichtung 10 umfasst auch einen Auslaufförderer 54, welcher auch in Form eines Förderbandes ausgestaltet ist. Der Auslaufförderer 54 dient dazu, die fertiggestellte Artikellage 14 an die nachgelagerte Vorrichtung, insbesondere eine Palettiervorrichtung, zu übergeben.

Der erste Zwischenförderer 24 ist in der Transportrichtung x zwischen dem zweiten Zwischenförderer 26 und dem Auslaufförderer 54 angeordnet. Der zweite Zwischenförderer 26, der erste Zwischenförderer 24 und der Auslaufförderer 54 sind also in der Transportrichtung x hintereinander angeordnet.

Ferner umfasst die Zuführvorrichtung 10 eine erste Handhabungseinrichtung 30. Die erste Handhabungseinrichtung 30 weist einen kreisförmigen ersten Arbeitsbereich 36 auf, welcher sich in der Transportrichtung x und in der Querrichtung y über einen Teil des ersten Einlaufförderers 16, einen Teil des ersten Zwischenförderers 24 und über einen Teil des zweiten Zwischenförderers 26 erstreckt.

Ferner umfasst die Zuführvorrichtung 10 eine zweite Handhabungseinrichtung 32. Die zweite Handhabungseinrichtung 32 weist einen kreisförmigen zweiten Arbeitsbereich 38 auf, welcher sich in der Transportrichtung x und in der Querrichtung y über einen Teil des zweiten Einlaufförderers 18, einen Teil des ersten Zwischenförderers 24 und über einen Teil des zweiten Zwischenförderers 26 erstreckt.

Ferner umfasst die Zuführvorrichtung 10 eine dritte Handhabungseinrichtung 34.

Die dritte Handhabungseinrichtung 34 weist einen kreisförmigen dritten Arbeitsbereich 40 auf, welcher sich in der Transportrichtung x und in der Querrichtung y über einen Teil des dritten Einlaufförderers 20, über einen Teil des ersten Einlaufförderers 16, über einen Teil des zweiten Einlaufförderers 18 und über einen Teil des zweiten Zwischenförderers 26 erstreckt.

Die erste Handhabungseinrichtung 30, die zweite Handhabungseinrichtung 32 und die dritte Handhabungseinrichtung 34 sind dabei als Roboter, beispielsweise in Form von Deltarobotern oder Hexapoden ausgestaltet.

Im Betrieb der Zuführvorrichtung 10 werden die einzelnen Produkte 12 von den Einlaufförderern 16, 18, 20 kontinuierlich zu den Arbeitsbereichen 36, 38, 40 der Handhabungseinrichtungen 30, 32, 34 gefördert. Die Produkte 12 werden dann von den Handhabungseinrichtungen 30, 32, 34 von den Einlaufförderern 16, 18, 20 auf die kontinuierlich laufenden Zwischenförderer 24, 26 zur Bildung einer Artikellage 14 entsprechend eines Setzbildes 48 versetzt. Dabei wird eine Anzahl von Produkten 12 zur Bildung der Artikellage 14 entsprechend des Setzbildes 48 um eine in Vertikalrichtung z verlaufende Achse gedreht.

Die Artikellage 14 wird dann von den Zwischenförderern 24, 26 an den Auslaufförderer 54 übergeben. Während der Übergabe der Artikellage 14 von dem ersten Zwischenförderer 24 an den Auslaufförderer 54 laufen der erste Zwischenförderer 24 und der Auslaufförderer 54 mit der gleichen Übergabegeschwindigkeit. Nicht erfindungsgemäß wird nach der Übergabe der Artikellage 14 von dem ersten Zwischenförderer 24 an den Auslaufförderer 54 wird der Auslaufförderer 54 auf eine Auslaufgeschwindigkeit beschleunigt wird, welche größer als die Übergabegeschwindigkeit ist.

In der hier gezeigten Darstellung wurde eine Artikellage 14 gerade an den Auslaufförderer 54 übergeben und befindet sich noch dort. Die Artikellage 14 wird von dem mit der Auslaufgeschwindigkeit laufenden Auslaufförderer 54 an eine nachgelagerte Vorrichtung, insbesondere an eine Palettiervorrichtung, übergeben.

Der Auslaufförderer 54 wird dann nach der Übergabe der Artikellage 14 an die nachgelagerte Vorrichtung wieder auf die Übergabegeschwindigkeit abgebremst, bevor eine weitere Artikellage 14 von dem ersten Zwischenförderer 24 an den Auslaufförderer 54 übergeben wird.

**In** der hier gezeigten Darstellung wurden bereits weitere Produkte 12 von den Handhabungseinrichtungen 30, 32, 34 auf den ersten Zwischenförderer 24 und auf den zweiten Zwischenförderer 26 versetzt, um eine weitere Artikellage 14 zu bilden.

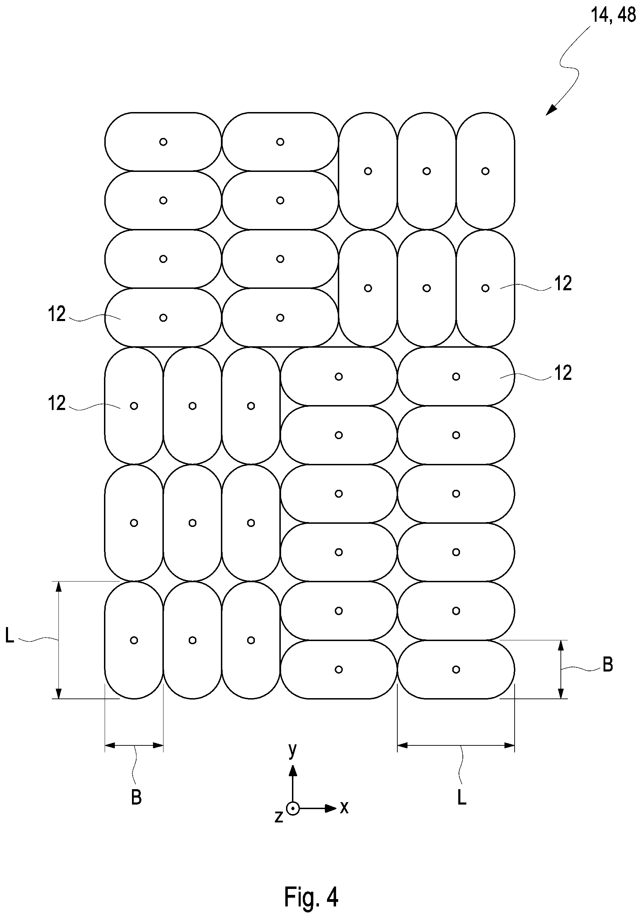

Figur 4 zeigt eine schematische Darstellung eines beispielhaften Setzbildes 48 einer Artikellage 14. Selbstverständlich sind anders gestaltete Setzbilder 48 von Artikellagen 14 denkbar, welche ebenfalls mittels einer Zuführvorrichtung 10 gemäß dem ersten Ausführungsbeispiel sowie dem zweiten Ausführungsbeispiel erstellt werden können.

Vorliegend weisen die Produkte 12 jeweils eine zylindrische Form mit annähernd rechteckiger aber nicht quadratischer Grundfläche auf. **In** Vertikalrichtung z verlaufende Kanten der Produkte 12 sind dabei abgerundet. Die Produkte 12 weisen also eine Länge L auf, welche von einer Breite B verschieden ist. Insbesondere sind die Produkte 12 nicht rotationssymmetrisch.

**In** dem hier dargestellten Setzbild 48 sind einige Produkte 12 derart angeordnet, dass deren Länge L parallel zu der Transportrichtung x und deren Breite B parallel zu der Querrichtung y orientiert ist. Andere Produkte 12 sind derart angeordnet, dass deren Breite B parallel zu der Transportrichtung x und deren Länge L parallel zu der Querrichtung y orientiert ist.

Insbesondere können mit dieser Vorrichtung auch rotationssymmetrische Produkte 12 oder Eimer gehandhabt werden, da die Produkte 12 nur einmal gegriffen und versetzt, nicht aber mit klassischen Schiebeeinrichtungen oder Geländern verschoben werden, wobei sie sich verdrehen könnten.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

### Bezugszeichenliste

- 10: Zuführvorrichtung
- 12: Produkt
- 14: Artikellage
- 16: erster Einlaufförderer
- 18: zweiter Einlaufförderer
- 20: dritter Einlaufförderer
- 24: erster Zwischenförderer
- 26: zweiter Zwischenförderer

- 30: erste Handhabungseinrichtung
- 32: zweite Handhabungseinrichtung
- 34: dritte Handhabungseinrichtung
- 36: erster Arbeitsbereich
- 38: zweiter Arbeitsbereich
- 40: dritter Arbeitsbereich

- 48: Setzbild

- 54: Auslaufförderer
- 56: erster Vorförderer
- 58: zweiter Vorförderer
- 60: dritter Vorförderer

- L: Länge
- B: Breite

- x: Transportrichtung
- y: Querrichtung
- z: Vertikalrichtung

## Patentansprüche

1. Verfahren zum Betrieb einer Zuführvorrichtung (10), umfassend mindestens einen Einlaufförderer (16, 18, 20), mindestens einen Zwischenförderer (24, 26), einen Auslaufförderer (54) und mindestens eine Handhabungseinrichtung (30, 32, 34), wobei
einzelne Produkte (12) von dem mindestens einen Einlaufförderer (16, 18, 20) kontinuierlich zu einem Arbeitsbereich (36, 38, 40) der mindestens einen Handhabungseinrichtung (30, 32, 34) gefördert werden;
die Produkte (12) von der mindestens einen Handhabungseinrichtung (30, 32, 34) von dem mindestens einen Einlaufförderer (16, 18, 20) auf den mindestens einen kontinuierlich laufenden Zwischenförderer (24, 26) zur Bildung einer Artikellage (14) entsprechend eines Setzbildes (48) versetzt werden;
die Artikellage (14) von dem mindestens einen Zwischenförderer (24, 26) an den Auslaufförderer (54) übergeben wird,
wobei die Zuführeinrichtung (10) einen ersten Einlaufförderer (16), welcher mit einer ersten Einlaufgeschwindigkeit läuft, und einen zweiten Einlaufförderer (18), welcher mit einer zweiten Einlaufgeschwindigkeit läuft, umfasst, wobei die mindestens eine Handhabungseinrichtung (30, 32, 34) einen zumindest annähernd kreisförmigen Arbeitsbereich (36, 38, 40) aufweist, welcher sich in einer Transportrichtung (x) und in einer Querrichtung (y) über mindestens einen Teil des mindestens einen Einlaufförderers (16, 18, 20) und über mindestens einen Teil des mindestens einen Zwischenförderers (24, 26) erstreckt, und wobei während der Bildung der Artikellage (14) der mindestens eine Zwischenförderer (24, 26) mit einer Übergabegeschwindigkeit läuft,
**dadurch gekennzeichnet, dass**
während der Übergabe der Artikellage (14) der mindestens eine Zwischenförderer (24, 26) und der Auslaufförderer (54) mit einer gleichen Geschwindigkeit laufen, und dass
der Auslaufförderer (54) nach der Bildung der Artikellage (14) auf eine Auslaufgeschwindigkeit beschleunigt wird, welche größer als die Übergabegeschwindigkeit ist, und dass
der Auslaufförderer (54) und der mindestens eine Zwischenförderer (24, 26) während der Übergabe der Artikellage (14) auf die Auslaufgeschwindigkeit beschleunigt werden.

2. Verfahren nach Anspruch 1, **dadurch gekennzeichnet, dass** die erste Einlaufgeschwindigkeit von der zweiten Einlaufgeschwindigkeit verschieden ist.

3. Verfahren nach einem der Ansprüche 1 bis 2, **dadurch gekennzeichnet, dass** die Zuführvorrichtung (10) einen dritten Einlaufförderer (20), welcher mit einer dritten Einlaufgeschwindigkeit läuft, umfasst, wobei die dritte Einlaufgeschwindigkeit von der ersten Einlaufgeschwindigkeit und/oder von der zweiten Einlaufgeschwindigkeit verschieden ist.

4. Verfahren nach einem der Ansprüche 1 bis 3, **dadurch gekennzeichnet, dass** der mindestens eine Zwischenförderer (24, 26) in einer Querrichtung (y) zwischen dem ersten Einlaufförderer (16) und dem zweiten Einlaufförderer (18) angeordnet ist.

5. Verfahren nach einem der vorstehenden Ansprüche, **dadurch gekennzeichnet, dass**
die Zuführvorrichtung (10) einen ersten Zwischenförderer (24) und einen zweiten Zwischenförderer (26) umfasst, welche mit der Übergabegeschwindigkeit laufen, wobei
der erste Zwischenförderer (24) in einer Transportrichtung (x) zwischen dem zweiten Zwischenförderer (26) und dem Auslaufförderer (54) angeordnet ist.

6. Verfahren nach einem der vorstehenden Ansprüche, **dadurch gekennzeichnet, dass**
der mindestens eine Zwischenförderer (24, 26) in einer Transportrichtung (x) zwischen dem mindestens einen Einlaufförderer (16, 18, 20) und dem Auslaufförderer (54) angeordnet ist.

7. Verfahren nach einem der vorstehenden Ansprüche, **dadurch gekennzeichnet, dass**
eine Anzahl von Produkten (12) zur Bildung der Artikellage (14) entsprechend des Setzbildes (48) um eine in Vertikalrichtung (z) verlaufende Achse gedreht werden.

## Claims

1. Method for operating a supply device (10), comprising
at least one feed conveyor (16, 18, 20), at least one intermediate conveyor (24, 26), a discharge conveyor (54) and at least one handling device (30, 32, 34), wherein individual products (12) are continuously conveyed from the at least one feed conveyor (16, 18, 20) to a work area (36, 38, 40) of the at least one handling device (30, 32, 34);
the products (12) are displaced by the at least one handling device (30, 32, 34) from the at least one feed conveyor (16, 18, 20) onto the at least one continuously running intermediate conveyor (24, 26) for forming an article layer (14) according to a placement pattern (48); the article layer (14) is transferred from the at least one intermediate conveyor (24, 26) to the discharge conveyor (54),
wherein the supply device (10) comprises a first feed conveyor (16) running at a first infeed speed and a second feed conveyor (18) running at a second infeed speed, wherein the at least one handling device (30, 32, 34) has an at least approximately circular work area (36, 38, 40) which extends in a transport direction (x) and in a transverse direction (y) over at least part of the at least one feed conveyor (16, 18, 20) and over at least part of the at least one intermediate conveyor (24, 26), and wherein
during the formation of the article layer (14), the at least one intermediate conveyor (24, 26) runs at a transfer speed, **characterized in that**
during the transfer of the article layer (14), the at least one intermediate conveyor (24, 26) and the discharge conveyor (54) run at an equal speed, and **in that**
after the formation of the article layer (14), the discharge conveyor (54) is accelerated to a discharge speed which is greater than the transfer speed, and **in that**
during the transfer of the article layer (14), the discharge conveyor (54) and the at least one intermediate conveyor (24, 26) are accelerated to the discharge speed.

2. Method according to Claim 1, **characterized in that** the first infeed speed is different from the second infeed speed.

3. Method according to either of Claims 1 and 2, **characterized in that**
the supply device (10) comprises a third feed conveyor (20) running at a third infeed speed, wherein
the third infeed speed is different from the first infeed speed and/or from the second infeed speed.

4. Method according to one of Claims 1 to 3, **characterized in that**
the at least one intermediate conveyor (24, 26) is arranged in a transverse direction (y) between the first feed conveyor (16) and the second feed conveyor (18).

5. Method according to one of the preceding claims, **characterized in that**
the supply device (10) comprises a first intermediate conveyor (24) and a second intermediate conveyor (26) both running at the transfer speed, wherein
the first intermediate conveyor (24) is arranged in a transport direction (x) between the second intermediate conveyor (26) and the discharge conveyor (54).

6. Method according to one of the preceding claims, **characterized in that**
the at least one intermediate conveyor (24, 26) is arranged in a transport direction (x) between the at least one feed conveyor (16, 18, 20) and the discharge conveyor (54).

7. Method according to one of the preceding claims, **characterized in that**
a number of products (12) are rotated about an axis extending in the vertical direction (z) for forming the article layer (14) according to the placement pattern (48).

## Revendications

1. Procédé destiné à faire fonctionner un dispositif d'alimentation (10), comprenant
au moins un convoyeur d'entrée (16, 18, 20), au moins un convoyeur intermédiaire (24, 26), un convoyeur de sortie (54) et au moins un système de manipulation (30, 32, 34), divers produits (12) étant convoyés en continu vers une zone de travail (36, 38, 40) de l'au moins un système de manipulation (30, 32, 34) par l'au moins un convoyeur d'entrée (16, 18, 20) ;
les produits (12) étant déplacés par l'au moins un système de manipulation (30, 32, 34) depuis l'au moins un convoyeur d'entrée (16, 18, 20) sur l'au moins un convoyeur intermédiaire (24, 26) fonctionnant en continu pour former une couche d'articles (14) conformément à un schéma de pose (48) ;
la couche d'articles (14) étant transférée depuis l'au moins convoyeur intermédiaire (24, 26) sur le convoyeur de sortie (54),
le dispositif d'alimentation (10) comprenant un premier convoyeur d'entrée (16), qui fonctionne à une première vitesse d'entrée, et un deuxième convoyeur d'entrée (18), qui fonctionne à une deuxième vitesse d'entrée, l'au moins un système de manipulation (30, 32, 34) comportant une zone de travail (36, 38, 40) au moins approximativement de forme circulaire, laquelle s'étend dans une direction de transport (x) et dans une direction transversale (y) sur au moins une partie de l'au moins un convoyeur d'entrée (16, 18, 20) et sur au moins une partie de l'au moins un convoyeur intermédiaire (24, 26), et
l'au moins un convoyeur intermédiaire (24, 26) fonctionnant, pendant la formation de la couche d'articles (14), à une vitesse de transfert, **caractérisé en ce que**
pendant le transfert de la couche d'articles (14), l'au moins un convoyeur intermédiaire (24, 26) et le convoyeur de sortie (54) fonctionnent à une vitesse identique, et que
le convoyeur de sortie (54) est accéléré, après la formation de la couche d'articles (14), sur une vitesse de sortie qui est supérieure à la vitesse de transfert, et que
le convoyeur de sortie (54) et l'au moins un convoyeur intermédiaire (24, 26) sont accélérés pendant le transfert de la couche d'articles (14) sur la vitesse de sortie.

2. Procédé selon la revendication 1, **caractérisé en ce que**
la première vitesse d'entrée est différente de la deuxième vitesse d'entrée.

3. Procédé selon l'une des revendications 1 à 2, **caractérisé en ce que**
le dispositif d'alimentation (10) comprend un troisième convoyeur d'entrée (20), qui fonctionne à une troisième vitesse d'entrée,
la troisième vitesse d'entrée étant différente de la première vitesse d'entrée et/ou de la deuxième vitesse d'entrée.

4. Procédé selon l'une des revendications 1 à 3, **caractérisé en ce que**
l'au moins un convoyeur intermédiaire (24, 26) est disposé dans une direction transversale (y) entre le premier convoyeur d'entrée (16) et le deuxième convoyeur d'entrée (18).

5. Procédé selon l'une des revendications précédentes, **caractérisé en ce que**
le dispositif d'alimentation (10) comprend un premier convoyeur intermédiaire (24) et un deuxième convoyeur intermédiaire (26), qui fonctionnent à la vitesse de transfert,
le premier convoyeur intermédiaire (24) étant disposé dans une direction de transport (x) entre le deuxième convoyeur intermédiaire (26) et le convoyeur de sortie (54).

6. Procédé selon l'une des revendications précédentes, **caractérisé en ce que**
l'au moins un convoyeur intermédiaire (24, 26) est disposé dans une direction de transport (x) entre l'au moins un convoyeur d'entrée (16, 18, 20) et le convoyeur de sortie (54).

7. Procédé selon l'une des revendications précédentes, **caractérisé en ce que**
un nombre de produits (12) sont tournés autour d'un axe s'étendant dans une direction verticale (z) pour former la couche d'articles (14) conformément au schéma de pose (48) .
